# NEUE EUROPÄISCHE PATENTSCHRIFT

(11) **EP 2 113 432 B2**
(45) Veröffentlichungstag und Bekanntmachung des Hinweises auf die Entscheidung über den Einspruch: **24.03.2021**
(45) Hinweis auf die Patenterteilung: 15.11.2017
(21) Anmeldenummer: 08008320.7
(22) Anmeldetag: 02.05.2008
(51) Int. Cl.: B60S 1/38, B60S 1/40

(54) **Scheibenwischer, insbesondere für Kraftfahrzeuge**
Windscreen wipers, in particular for a motor vehicle
Essuie-glace, en particulier pour véhicules automobiles

(43) Veröffentlichungstag der Anmeldung: 04.11.2009
(73) Patentinhaber: Eletromecanica Dyna S/A, Sao Paulo (BR)
(72) Erfinder: Nacamuli, Marc, Guarulhos CEP 07042-01 Sao Paulo (BR)
(74) Vertreter: Patentanwälte Dr. Keller, Schwertfeger Partnerschaft mbB

(56) Entgegenhaltungen:
- EP-A- 1 795 406
- WO-A-02/40328
- WO-A-2006/106006
- DE-A1- 10 323 997
- DE-A1- 10 347 637
- FR-A- 2 890 925
- KR-B1- 100 725 988

## Beschreibung

Die vorliegende Erfindung betrifft einen Scheibenwischer, insbesondere für eine Scheibe eines Kraftfahrzeugs, mit einem antreibbaren Wischerarm und einem damit gelenkig verbundenen Flachwischblatt nach dem Oberbegriff des Anspruchs 1 (siehe zum Beispiel die DE 103 47 637 A1).

Vorrichtungen zum Verbinden eines Wischblatts mit einem Wischerarm nach den Merkmalen im Oberbegriff des Anspruchs 1 sind aus der EP 186 88 60 B1 und aus der EP 167 32 64 A0 (dem WO 2005 039 944 A1 entsprechend) bekannt. Hierbei weist der Wischerarm an seinem mit dem Wischblatt verbindbaren Ende jeweils die gleiche Konstruktion auf. Diese besteht aus einem im Wesentlichen U-förmigen Querschnittsprofil mit einer Deckwand und zwei Seitenwänden, an deren unteren, im montierten Zustand zum Wischblatt weisenden Enden jeweils eine nach innen gebogene Leiste angeformt ist. Zusätzlich ist in der Deckwand des Wischerarmendes eine Öffnung vorgesehen.

Die unteren Leisten des Wischerarmendes fungieren in der o.g. EP 186 88 60 B1 und der EP 167 32 64 A0 jeweils als Gegenrastmittel. Bei der Montage von Wischblatt mit Wischerarm wird das Wischerarmende in senkrechter Richtung auf ein am Wischblatt gelenkig angeordnetes Verbindungsstück aufgerastet. Dafür sind am Verbindungsstück seitlich schräg nach außen abstehende Federzungen ausgebildet, die beim Aufsetzen des Wischerarmendes zunächst durch die Leisten des Wischerarmendes seitlich nach innen eingedrückt werden, bevor sie in der Endmontagestellung letztlich hinter den Leisten einrasten bzw. mit diesen verrasten.

Dadurch ist eine positionsstabile Fixierung von Wischblatt und Wischerarm in senkrechter Richtung erreicht. Die notwendige Fixierung in Längsrichtung wird durch eine an der Oberseite des Verbindungsstücks ausgebildete Federzunge garantiert, die mit einer an ihrem Ende angeformten Taste in die Öffnung der Deckwand des Wischerarmendes einrastet.

Bei exakter senkrechter Ausrichtung finden diese beiden beschriebenen Verrastungsschritte von Leisten gegen seitliche Federzungen und Öffnung gegen obere Federzunge gleichzeitig statt. In der Praxis steht dem Benutzer bei der Montage aber nur sein Augenmaß zur Verfügung, um das Wischblatt genau so zum Wischerarmende in Längsrichtung zu positionieren, dass beim vertikalen Aufrasten die Taste auch gleichzeitig in die Öffnung dringt. Häufig wird der Benutzer nach dem vertikalen Aufrasten deshalb noch in Längsrichtung das Wischblatt vor- oder zurückschieben müssen, bis die Längsverrastung durch Eingriff von WischerarmÖffnung mit Verbindungsstück-Federzunge erreicht ist. Das macht die Montage zeitaufwendiger und birgt die Gefahr, dass bei einer unaufmerksamen Montage die Komplettverrastung noch nicht vorliegt. Außerdem sind Rastelemente, die wie hier als Federzungen ausgebildet sind, immer auch Elemente, die bei der Montage einer regelmäßigen Beanspruchung und damit auch einer möglichen Beschädigung unterliegen.

Eine Vorrichtung zum Verbinden eines Wischblatts mit einem anderen Wischerarm ist aus der EP 156 53 59 B1 bekannt. Auch hier ist das mit dem Wischblatt verbindbare Ende des Wischerarms U-förmig ausgebildet und weist eine Deckwand und zwei Seitenwände auf. Dabei sind aber an den Seitenwänden des Wischerarmendes V-förmige Hinterschneidungen vorgesehen, deren schräge Begrenzungskanten mit der Längsachse des Wischerarms einen spitzen Winkel einschließen.

Die Kanten dieser Hinterschneidungen fungieren als Rastkanten, die bei der Montage von Wischblatt mit Wischerarm an seitlichen Rastzungen eines am Wischblatt pendelbar gelagerten Verbindungselements verrasten.

Um den Wischerarm zusätzlich vor Abheben von dem Wischblatt zu sichern, ist ein zungenförmiger Abschnitt an der Spitze des Wischerarmendes ausgebildet, der in eine Öffnung in der Deckwand des Verbindungselements eingeführt ist, wobei dieser zungenförmige Einführungsabschnitt in Endmontagestellung gegen die Innenseite der Deckwand des Verbindungselements anliegt. Durch diese beiden beschriebenen Verbindungssysteme ist das Wischblatt gegenüber senkrechtem und axialem Lösen vom Wischerarm gesichert.

Des Weiteren läuft in der o.g. EP 156 53 59 B1 die Montage des Wischblatts mit dem Wischerarm dabei in der Weise ab, dass das Wischblatt zunächst mit seiner Öffnung im Verbindungselement auf den zungenförmigen Einführungsabschnitt des Wischerarmendes gesteckt wird, wobei Wischerarm und Wischblatt in Längsausrichtung dafür zueinander verschwenkt werden. Zur Erreichung der Endmontagestellung wird schließlich das Wischblatt gegen den Wischerarm geschwenkt, bis in längsachsenparalleler Ausrichtung von Wischblatt und Wischerarm letztlich die Verrastung der seitlichen Rastzungen des Verbindungselements mit den seitlichen Rastkanten des Wischerarmendes erfolgt.

Bedingt durch die Montageweise, bei der das Wischblatt zunächst aufgesteckt und dann um diesen Punkt verschwenkt wird, sind seitliche Rastelemente am Verbindungselement des Wischblatts unverzichtbar. Rastelemente haben allerdings, wie schon zum vorhergehend beschriebenen Stand der Technik angemerkt, den Nachteil, dass sie als elastische Elemente bei der Montage und Demontage regelmäßig einer mechanischen Belastung und damit einer eventuellen Beschädigung unterliegen.

Aufgabe der vorliegenden Erfindung ist es, die Verbindung eines Flachwischblatts mit einer Wischerarm-Endkonstruktionen der im Oberbegriff von Anspruch 1 genannten Art dahingehend zu verbessern, dass die Montage von Flachwischblatt und Wischerarmende ohne seitliche, elastische Verrastungselemente erreicht wird, sondern stattdessen durch formschlüssiges Einführen bzw. Einschieben und dabei trotzdem schnell und einfach erfolgt.

Diese Aufgabe wird erfindungsgemäß durch die Merkmale des Anspruchs 1 gelöst.

Der mit der Erfindung erzielte Vorteil besteht darin, dass ein am zentralen Anschlussteil des Flachwischblatts schwenkbar angeordnetes Verbindungsteil eingesetzt wird, das im Unterschied zu den aus dem Stand der Technik bekannten Verbindungsstücken bzw. -elementen nicht mehr bzw. nicht mehr ausschließlich über eine Rast- oder Clip-Verbindung mit den beiden bekannten Wischerarmenden verbunden wird.

Dabei sind die seitlichen Federzungen durch feste, nicht bei der Montage zu verbiegende Anformungen ersetzt worden.

So sind zum einen seitliche Gleitleisten am Verbindungsteil vorgesehen, die eine Montage mit dem Wischerarmende nach dem Oberbegriff des Anspruchs 1 nicht länger über eine senkrechte Rast- bzw. Clip-Verbindung, wie sie aus dem Stand der Technik bekannt ist, erfolgen lässt. Vielmehr geschieht jetzt die Montage von Flachwischblatt mit Wischerarm durch axiales stirnseitiges Einschieben des Verbindungsteils in das offene Wischerarmende.

Auf bewegliche Federzungen an den Seitenwänden des Verbindungsteils kann somit verzichtet werden, und bei der Montage wird nur noch die weiterhin in der Deckwand des Verbindungsteils vorhandene Federzunge zur Längsverrastung mit der Öffnung in der Deckwand des Wischerarmendes einer mechanischen Belastung durch Auslenkung unterzogen.

Ein weiterer Vorteil ist, dass die Federzunge in der Deckwand des Verbindungsteils bei der vorliegenden Erfindung in definierter Weise beim horizontalen Einschieben in die Öffnung des Wischerarmendes einfällt. Ein beim vertikalen Aufrasten mögliches Nichtaufeinandertreffen von Federzunge und Öffnung ist hier nicht möglich.

Weitere, die Erfindung in vorteilhafter Weise weiterbildende Merkmale enthalten die Unteransprüche.

Anhand des in den Zeichnungen dargestellten Ausführungsbeispiels wird die Erfindung im Folgenden näher beschrieben und erläutert. Es zeigen
- Fig. 1: eine perspektivische Längsansicht eines Flachwischblatts;
- Fig. 2 und 3: perspektivische Ansichten eines Anschlussteils und eines Verbindungsteils des Flachwischblatts in getrenntem und zusammenmontiertem Zustand;
- Fig. 4a bis 4c: Montageablauf zur Verbindung des Anschlussteils mit dem Verbindungsteil in Seitenansicht;
- Fig. 5a bis 5c: Montageablauf zur Verbindung des Anschlussteils mit dem Verbindungsteil in Frontansicht;
- Fig. 6: eine perspektivische Darstellung eines Wischerarmendes nach dem Oberbegriff des Patentanspruchs 1;
- Fig. 7a bis 7d: Montageablauf zur Verbindung der Verbindungsmittel des Flachwischblatts aus Fig. 3 mit dem Wischerarmende aus Fig. 6 in Seitenansicht;
- Fig. 8: eine perspektivische Darstellung einer erfindungsgemäßen Wischerarm-Flachwischblatt-Verbindung;
- Fig. 9a bis 9c: Montageablauf zur Verbindung eines Haubenteils mit dem am Wischerarmende eingebauten Verbindungsteil in Seitenansicht;
- Fig. 10: eine perspektivische Darstellung einer mit Haubenteil ausgeführten Wischerarm-Flachwischblatt-Verbindung;
- Fig. 11: eine perspektivische Darstellung eines weiteren Wischerarmendes und der Verbindungsmittel des Flachwischblatts;
- Fig. 12a bis 12c: Montageablauf zur Erreichung einer Vormontageposition zwischen den Verbindungsmitteln des Flachwischblatts aus Fig. 3 und dem Wischerarmende aus Fig. 11 in Seitenansicht;
- Fig. 13: eine seitliche Halbschnittdarstellung der Verbindungsmittel des Flachwischblatts und des Wischerarmendes in Vormontageposition;
- Fig. 14: eine perspektivische Darstellung der Verbindungsmittel des Flachwischblatts und des Wischerarmendes in Vormontageposition;
- Fig. 15a und 15b: Montageablauf zur Verbindung des Haubenteils mit dem an das Wischerarmende gekoppelten Verbindungsteil;
- Fig. 16: eine perspektivische Darstellung einer Wischerarm-Flachwischblatt-Verbindung,
wobei die Figuren 11 bis 16 Beispiele zum besseren Verständnis der Erfindung zeigen, die nicht unter den Schutzbereich der Erfindung fallen.

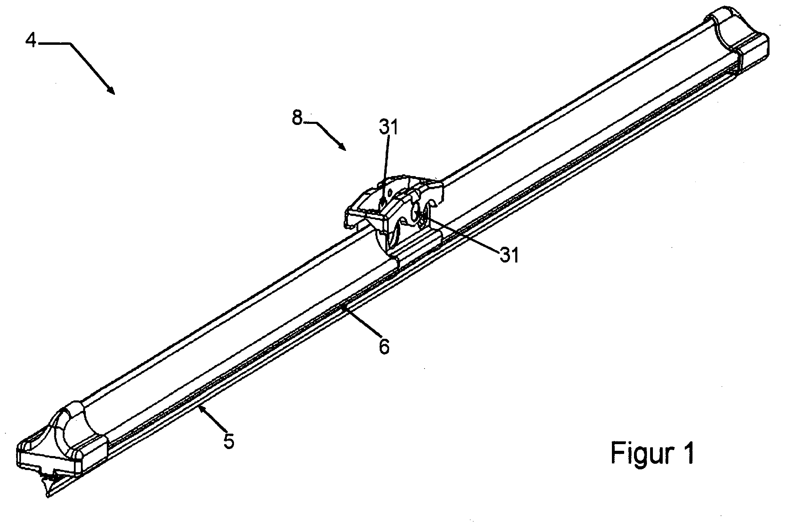

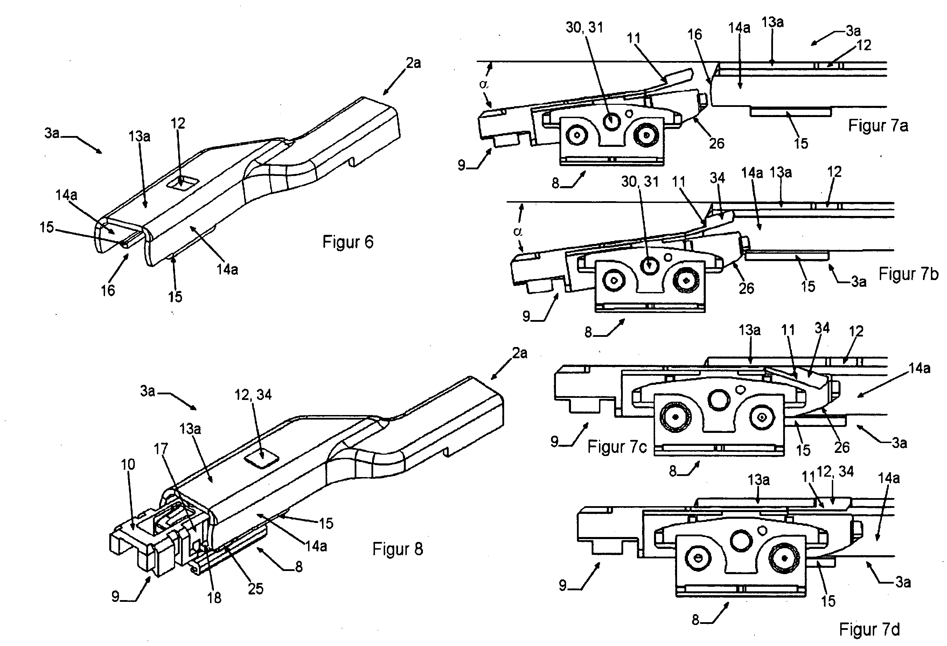

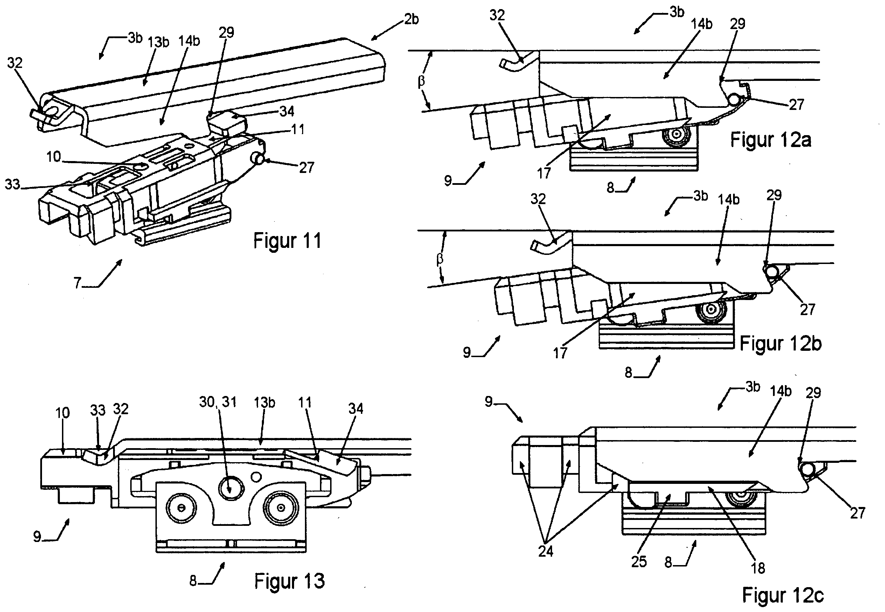

In Fig. 1 ist ein Flachwischblatt 4 dargestellt, das gemäß der hier vorliegenden Erfindung durch Anbindung an einen Wischerarm 2a, 2b, der entweder die in Fig. 6 oder die in Fig. 11 dargestellte Endkonstruktion aufweisen kann, zu einem erfindungsgemäßen Scheibenwischer 1 wird. Flachwischblätter sind schon lange aus dem Stand der Technik bekannt und weisen als elastisches Element mindestens eine bandförmig langgestreckte Federschiene 6 auf, die als Tragmittel für das darunter angeordnete Wischgummi 5 dient, das wiederum im Betriebszustand auf der zu reinigenden Scheibe anliegt. An der dem Wischgummi 5 abgewandten Seite weist das Flachwischblatt 4 eine aerodynamisch geformte Spoilerabdeckung auf. Zentral am Flachwischblatt 4 angeordnet befindet sich ein Anschlussteil 8, das einen kastenförmigen, nach oben offenen Aufbau aus zwei Stirn- und zwei Seitenwänden besitzt und in dessen zwei Seitenwänden jeweils miteinander fluchtende Durchgangsbohrungen 31 eingebracht sind.

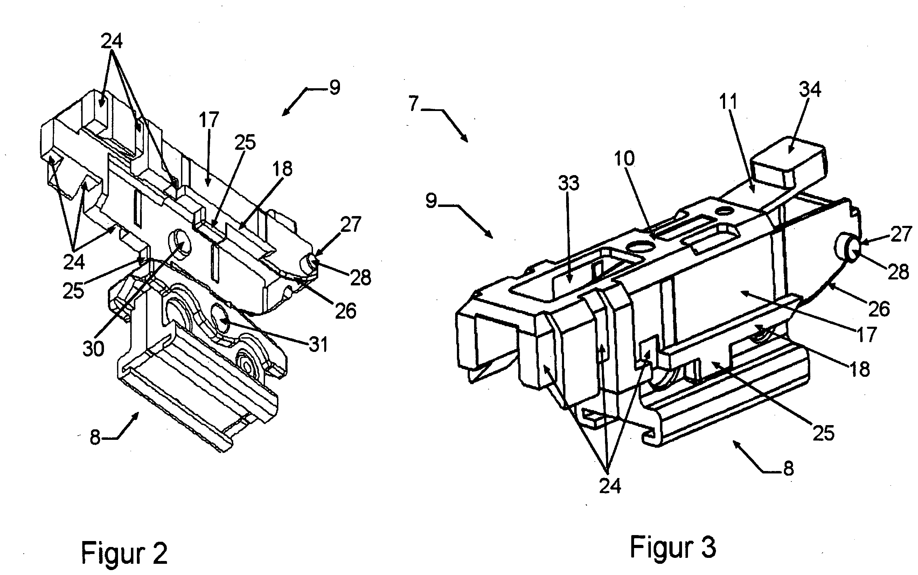

In den nachfolgenden Figuren wird das Flachwischblatt 4 nur noch durch das Anschlussteil 8 dargestellt, das heißt die langgestreckte Mimik des Flachwischblatts 4 mit Federschiene 6, Wischgummi 5 etc. ist der Übersichtlichkeit halber in den Darstellungen weggelassen worden. Dies ist allerdings ein rein zeichnerisches Hilfsmittel und bedeutet keineswegs, dass in den nachfolgend dargestellten Montageschritten das Anschlussteil 8 vom Flachwischblatt 4 getrennt wäre. Vielmehr wird z.B. aus Fig. 2 deutlich, dass am unteren Ende des Anschlussteils 8 eine klammerförmige Ausnehmung für das meist in Form einer Federschiene 6 gebildete Tragmittel vorgesehen ist. Die dort hindurchgeführte Federschiene 6 ist dann untrennbar, z.B. durch Löten oder durch Nieten, mit dem Anschlussteil 8 verbunden.

Die Verbindungsmittel 7 des Flachwischblatts 4 zur Anbindung des Flachwischblatts 4 an die Kopplungsabschnitte der zwei Wischerarmenden 3a, 3b werden von diesem Anschlussteil 8 als unlösbarem Bestandteil des Flachwischblatts 4 und einem zusätzlichen Verbindungsteil 9 gebildet, das lösbar an dieses Anschlussteil 8 angebracht wird und in Fig. 2 und Fig. 3 zunächst in vom Anschlussteil 8 gelöstem und dann in am Anschlussteil 8 montiertem Zustand dargestellt ist. Das Verbindungsteil 9 besitzt im Querschnitt im Wesentlichen einen U-förmigen Aufbau aus zwei Seitenwänden 17 und einer Deckwand 10, wobei die in Haupterstreckungsrichtung des Verbindungsteils 9 und damit auch des Flachwischblatts 4 ausgerichteten Seitenwände 17 deutlich, in etwa 4- bis 5-mal, länger sind als die quer zur Haupterstreckungsrichtung weisende Deckwand 10. Dabei ist die Länge der Seitenwände 17 des Verbindungsteils 9 auch deutlich, annähernd doppelt, so groß wie die Seitenwandlängen des Anschlussteils 8.

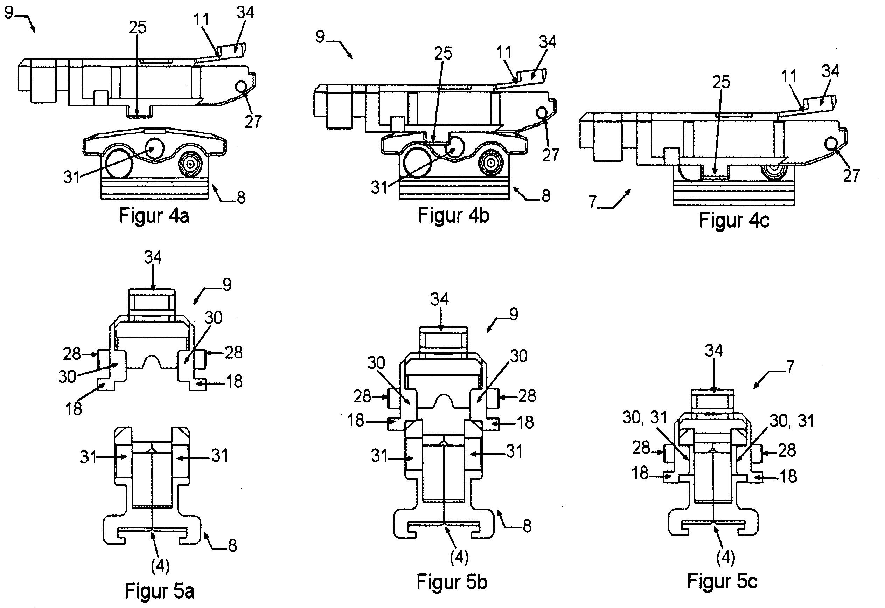

In den Figuren 4a bis 4c und 5a bis 5c ist in Längs- und Frontansicht dargestellt, wie das Verbindungsteil 9 mit dem Anschlussteil 8 verbunden wird. Zu diesem Zweck wird das Verbindungsteil 9 entsprechend den Figuren 4a und 5a derart zum Anschlussteil 8 positioniert, dass die offene Bodenseite des im Querschnitt U-förmigen Verbindungsteils 9 zum Anschlussteil 8 weist. Dabei hat das Verbindungsteil 9 zwischen den Seitenwänden 17 eine Innenbreite, die annähernd der Außenbreite des Anschlussteils 8 entspricht. Durch Aufsetzen von oben entsprechend der Montagesequenz aus den Figuren 4a bis 4c bzw. 5a bis 5c wird das Verbindungsteil 9 über die Außenseiten des Anschlussteils 8 geschoben, so dass die Seitenwände 17 von Verbindungsteil 9 und Anschlussteil 8 annähernd passgenau aneinander anliegen. Um eine im Betriebszustand zwar axial feste, aber trotzdem drehbare Verknüpfung von Verbindungsteil 9 und Anschlussteil 8 herzustellen, weist das Verbindungsteil 9 an seinen zwei Seitenwänden 17 jeweils einen nach innen weisenden, miteinander fluchtenden Zapfen 30 auf. Beim Aufsetzen des Verbindungsteils 9 bewirken die Innenzapfen 30 zunächst, dass sich die Seitenwände 17 des Verbindungsteils 9 nach außen aufbiegen. Da die Seitenwände 17 nur durch die Deckwand 10 und einen dünnen Steg an einem Längsende miteinander verbunden sind, ist diese Elastizität gegeben. Letztlich fallen dann die Innenzapfen 30 des Verbindungsteils 9 in die Lagerbohrungen 31 des Anschlussteils 8 ein, und eine feste, aber drehbare Verbindung zwischen Verbindungsteil 9 und Anschlussteil 8 ist erreicht. Um das Verbindungsteil 9 wieder vom Anschlussteil 8 lösen zu können, müssen die Seitenwände 17 in einfacher Weise nur leicht nach außen aufgebogen werden, um die Innenzapfen 30 und Lagerbohrungen 31 außer Eingriff zu bringen. Dann kann das Verbindungsteil 9 durch Herausschieben nach oben vom Anschlussteil 8 wieder gelöst werden.

Fig. 6 zeigt die Konstruktion eines nach dem Oberbegriff von Patentanspruch 1 mit dem Flachwischblatt 4 aus Fig. 1 drehbar zu verkoppelnden Wischerarmendes 3a. Zu diesem Zweck weist das Wischerarmende 3a verschiedene Kopplungsmittel auf, die im montierten Zustand mit entsprechenden Gegenkopplungsmitteln des Verbindungsteils 9 zur Erreichung einer festen, aber jederzeit lösbaren Verbindung von Verbindungsteil 9 und Wischerarm 2a benötigt werden. Da nach den Fig. 4a bis 4c bzw. 5a bis 5c das Verbindungsteil 9 dabei wiederum drehbar mit dem Flachwischblatt 4 verbunden ist, ist somit auch eine feste, aber pendelnde Ausgleichsbewegungen im Betriebszustand zulassende Verbindung von Flachwischblatt 4 und Wischerarm 2a erzielt. Das Wischerarmende 3a ist ähnlich dem Verbindungsteil 9 in seinem Querschnitt im Wesentlichen U-förmig und besteht aus einer Deckwand 13a und zwei Seitenwänden 14a. Als Kopplungsmittel sind in der Deckwand 13a eine annähernd quadratische Öffnung 12 und an den unteren Enden der Seitenwände 14a jeweils eine annähernd im rechten Winkel nach innen weisende Leiste 15 vorgesehen.

Die zusammenmontierten Verbindungsmittel 7 des Flachwischblatts 4 werden nun entsprechend den Figuren 7a bis 7d mit dem Wischerarm 2a verbunden. In diesen Seitenansichten ist deutlich sichtbar, dass das Verbindungsteil 9 in seiner Höhe niedriger ist als das Anschlussteil 8. Dadurch ist zwischen dem unteren Ende des Verbindungsteils 9 und dem unteren Ende des Anschlussteils 8 genügend Abstand vorhanden, um eine begrenzte Verdrehung des Verbindungsteils 9 zum Anschlussteil 8 zu ermöglichen. Diese Verdrehung ist nicht nur im Betriebszustand, sondern wie aus Fig. 7a und 7b deutlich wird, auch für die ersten Montageschritte zur Anbindung an das Wischerarmende 3a erforderlich. Hierfür wird zunächst das Flachwischblatt 4 längsachsenparallel zur Wischerarm 2a - Längsachse ausgerichtet, wobei die offene Unterseite des Wischerarmendes 3a den Verbindungsmitteln 7 des Flachwischblatts 4 zugewandt ist. Zur Montage von Flachwischblatt 4 mit Wischerarm 2a wird nun das Verbindungsteil 9 in die offene Stirnseite 16 des Wischerarmendes 3a eingeschoben. An der Deckwand 10 des Verbindungsteils 9 ist eine Federzunge 11 ausgebildet, die sich schräg nach oben aus der Deckwandebene heraus ausdehnt und an ihrem Ende eine nasenförmige Erhebung 34 besitzt. Bedingt durch diese Federzunge 11 ist es nicht möglich, das Verbindungsteil 9 direkt in seiner Längsachse mit der Wischerarm 2a - Längsachse fluchtend einzuschieben, da hierbei die Federzunge 11 gegen die Deckwand 13a des Wischerarmendes 3a prallen würde. Um dies zu verhindern, wird entweder, wie in den Figuren 7a und 7b dargestellt, nur das Verbindungsteil 9 oder das gesamte Flachwischblatt 4 samt Verbindungsteil 9 zum Wischerarm 2a geneigt, so dass zwischen deren beiden Längsachsen ein Montagewinkel α entsteht. Dieser Montagewinkel α liegt im Bereich von 0° bis 90°, bevorzugt im Bereich von 0° bis 45°. Indem zusätzlich am unteren Ende des eingeführten Längsendes des Verbindungsteils 9 eine Schräge 26 ausgebildet ist, kann das Verbindungsteil 9 nun in das Wischerarmende 3a eingeführt werden. Gemäß Fig. 7c wird das Verbindungsteil 9 nach erfolgter schräg ausgerichteter Einführung wieder in eine Position zurückgeschwenkt, in der die Längsachsen von Verbindungsteil 9 und Wischerarmende 3a miteinander fluchten. Bei diesem Zurückschwenken wird die Federzunge 11 durch die Anlage der Rastnase 34 des Verbindungsteils 9 an der Innenseite der Deckwand 13a des Wischerarmendes 3a nach unten in das Innere des Verbindungsteils 9 gebogen. Jetzt kann das Verbindungsteil 9 in Längsrichtung eingeschoben werden. Dafür weist das Verbindungsteil 9 am unteren Ende seiner beiden Seitenwände 17 rechtwinklig nach außen weisende Gleitleisten 18 auf, die auf den als Führung dienenden Leisten 15 des Wischerarmendes 3a gleitbar gelagert sind, so dass das Verbindungsteil 9 auf diesen Führungsleisten 15 horizontal eingeschoben werden kann. Um eine Querzentrierung schon beim Einführen nach Fig. 7b, also in einer Montagephase, in der die Leisten 15, 18 von Verbindungsteil 9 und Wischerarmende 3a noch nicht in Auflage sind, zu erreichen, weist das Verbindungsteil 9 neben der Einführschräge 26 an seinem in das Wischerarmende 3a eingeführten Längsende noch zwei Außenzapfen 27 auf. Die zwischen den Stirnflächen 28 der beiden Außenzapfen 27 gemessene Breite des Verbindungsteils 9 entspricht dabei der Breite zwischen den Innenseiten der beiden Seitenwände 14a des Wischerarmendes 3a, so dass schon beim Einführen die Stirnflächen 28 der beiden Außenzapfen 27 an den Innenseiten der beiden Seitenwände 14a des Wischerarmendes 3a anliegen.

Um zur Endmontageposition nach Fig. 8 zu gelangen, wird das Verbindungsteil 9 des Flachwischblatts 4 so weit eingeschoben, bis die Rastnase 34 der an der Deckwand 10 des Verbindungsteils 9 angeformten Federzunge 11 in die Öffnung 12 der Deckwand 13a des Wischerarmendes 3a einrastet. Die Rastnase 34 besitzt zudem in etwa die gleichen Abmessungen wie die Wischerarmöffnung 12, so dass sich die Außenseiten der Rastnase 34 gegen die Innenseiten der Öffnung 12 abstützen, womit eine positionsstabile Fixierung von Wischerarm 2a und Verbindungsteil 9 bzw. somit auch Flachwischblatt 4 erreicht ist. Des Weiteren weisen die beiden seitlichen Gleitleisten 18 des Verbindungsteils 9 jeweils einen nach unten angeformten Sockel 25 auf, die in ihrer Längsposition so auf die Längsposition der Rastnase 34 abgestimmt sind, dass im montierten Zustand die Sockel 25 jeweils an den seitlichen Führungsleisten 15 des Wischerarmendes 3a stirnseitig anliegen.

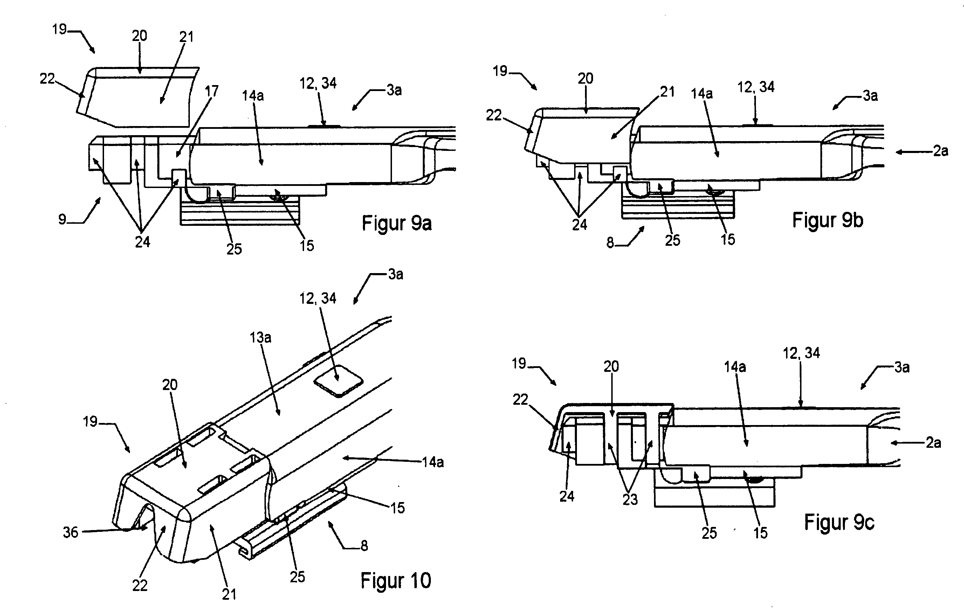

Mit der Endmontageposition nach Fig. 8 liegt eine betriebsbereite Verbindung von Wischerarm 3a und Flachwischblatt 4 vor. Allerdings ist sichtbar, dass nach dem Einschieben immer noch ein großer Teil, etwa die Hälfte der Länge des Verbindungsteils 9, noch außerhalb des Wischerarmendes 3a verbleibt. Damit ist beim Scheibenwischer 1 ein Längen- und Breitenversatz im Kopplungsbereich von Wischerarm 2a und Flachwischblatt 4 festzustellen. Das ist zum einen unästhetisch und zum anderen aerodynamisch nicht günstig, weil an diesen Versatzkanten leicht unerwünschte Verwirbelungen entstehen können, was sich im Fahrbetrieb in einer Zunahme der Strömungsgeräusche niederschlagen würde. Um einen mit dem Wischerarmende 3a in Länge und Breite bündigen Abschluss herzustellen, wird ein haubenförmiges Deckelteil 19, das im Querschnitt ebenfalls U-förmig ist und aus einer Deckwand 20, zwei Seitenwänden 21 und einer Stirnwand 22 aufgebaut ist, auf das freiliegende Ende des Verbindungsteils 9 aufgerastet. Das Haubenteil 19 umfasst dabei mit seinen vier Wänden 20, 21, 22 die freiliegenden Wände 10, 17 des Verbindungsteils, wobei die Außengeometrie des offenen Längsendes des Haubenteils 19 so an die Stirnkanten des Wischerarmendes 3a angepasst ist, dass das Haubenteil 19 einen bündigen Abschluss des Wischerarmendes 3a bildet. Zur Bewerkstelligung der Aufrastverbindung weisen Haubenteil 19 und Verbindungsteil 9 miteinander kooperierende Rastmittel 23, 24 auf. Das Haubenteil 19 weist an der Innenseite seiner Seitenwände 21 zu diesem Zweck zwei vertikal verlaufende, voneinander beabstandete Rastzungen 23 auf. Das Verbindungsteil 9 weist wiederum an der Außenseite seiner Seitenwände 17 drei gleich beabstandete, vertikal verlaufende Rastnuten 24 auf, deren Intervallabstand dem Abstand der Haubenteil 19 - Rastzungen 23 entspricht. Das Haubenteil 19 kann somit entweder auf die zwei in Längsrichtung gesehen dem Wischerarmende 3a zugewandten oder auf die zwei in Längsrichtung gesehen vom Wischerarmende 3a abgewandten Rastnuten 24 des Verbindungsteils 9 aufgerastet werden. Im vorliegenden Fall findet die Aufrastung auf die zwei dem Wischerarmende 3a zugewandten Rastnuten 24 statt, so dass ein Endmontageaufbau von Wischerarm 2a und Flachwischblatt 4 entsprechend Fig. 10 erreicht wird. Es ist für den Fachmann ersichtlich, dass das Aufrasten des Haubenteils 19 auf das Verbindungsteil 9 auch vor der in den Figuren 7a bis 7d dargestellten Montagesequenz von Wischerarm 2a und Flachwischblatt 4 erfolgen kann. Das Haubenteil 19 würde den dort dargestellten Montagevorgang nicht behindern.

Die Seitenwände 21 des Haubenteils 19 werden durch Kontakt der Rastzungen 23 mit den Außenseiten des Verbindungsteils 19 beim Aufsetzen zunächst nach außen verbogen, bis in Endmontageposition formkomplementäre Endausformungen an den Rastzungen 23 und Rastnuten 24 ineinander greifen und die Seitenwände 21 des Haubenteils 19 dann wieder plan an den Seitenwänden 17 des Verbindungsteils 9 anliegen.

Im entsprechend Fig. 10 dargestellten endmontierten Zustand kann die Rastnase 34 des Verbindungsteils 9 quasi als Betätigungstaste eingedrückt werden, um dann zur Demontage des Flachwischblatts 4 dieses einfach nur in umgekehrter Reihenfolge der Montagesequenz aus den Figuren 7a bis 7d herausschieben zu können. Weiterhin ist in Fig. 10 besonders deutlich zu erkennen, dass das Haubenteil 19 an seiner Stirnwand 22 einen V-förmigen, symmetrischen Schlitz 36 aufweist, dessen Kontur annähernd der Außenkontur der Spoilerabdeckung des Flachwischblatts 4 aus Fig. 1 entspricht. Durch diesen Schlitz 36 wird ermöglicht, dass sich das mit dem Haubenteil 19 versehene Verbindungsteil 9 weiterhin, zumindest begrenzt, relativ zum Flachwischblatt 4 verdrehen lässt.

In der Fig. 11 sind in perspektivischer Ansicht die bereits beschriebenen Verbindungsmittel 7 des Flachwischblatts 4 und ein weiterer Wischerarm 2b dargestellt. Ein solcher Wischerarm 2b weist an seinem Ende 3b ebenfalls Kopplungsmittel zum Anschluss von oben, als sogenannter "Top-lock"-Verschluss, an ein Flachwischblatt 4 auf. In weiterer Übereinstimmung hat der Wischerarm 2b an seinem Ende 3b einen im Wesentlichen U-förmig aufgebauten Querschnitt. Allerdings unterscheidet sich die Art der Kopplungsmittel. Dieser Wischerarm trägt an seiner Deckwand 13b keine Öffnung, besitzt aber dafür in seinen beiden Seitenwänden 14b jeweils eine V-förmige, abgerundete Hinterschneidung 29. Außerdem weist der Wischerarm 2b an seinem Frontende einen zungenförmigen Fortsatz 32 auf. Das Verbindungsteil 9 weist zur Kooperation mit den Kopplungsmitteln des Wischerarmendes 3b seinerseits entsprechende Gegenkopplungsmittel auf, die in der Verbindung mit dem vorab erwähnten Wischerarm 2a (Fig. 6) nach Patentanspruch 1 noch eine andere Funktion oder zum Teil gar keine Funktion ausgeübt haben. Andererseits üben die Gegenkopplungsmittel des Verbindungsteils 9, die die Verbindung mit dem in Fig. 6 dargestellten Wischerarm 2a nach Patentanspruch 1 gewährleisten, bei der im Nachfolgenden beschriebenen Verbindung mit dem in Fig. 11 dargestellten Wischerarm 2b ebenfalls zum Teil eine andere oder zum Teil gar keine Funktion aus.

Die Figuren 12a bis 12c zeigen den Montageablauf zum Anschluss des Flachwischblatts 4 an den Wischerarm 2b. Auch hier werden die Verbindungsmittel 7 des Flachwischblatts 4 so zum Wischerarmende 3b ausgerichtet, dass die offene Unterseite des Wischerarmendes 3b diesen Verbindungsmitteln 7 zugewandt ist. Dabei wird das Verbindungsteil 9 so in Bezug zur Wischerarm 2b - Längsachse geneigt, dass die an den Außenseiten der beiden Seitenwände 17 des Verbindungsteils 9 ausgebildeten Zapfen 27 in die Hinterschneidungen 29 an den Seitenwänden 14b des Wischerarmendes 3b eingesetzt werden können. Durch die Anlage der Außenseiten der Außenzapfen 27 gegen die Begrenzungskanten der Seitenwandhinterschneidungen 27 ist eine axiale Fixierung zwischen Wischerarm 2b und Flachwischblatt 4 erreicht. Die für die Montage notwendige Schrägneigung um den Winkel β zwischen Verbindungsteil 9 - und Wischerarm 2b - Längsachse kann entweder nur durch Verdrehung des Verbindungsteils 9 um die Drehachse 30, 31 zum Anschlussteil 8 oder durch Verdrehung des gesamten Flachwischblatts 4 bereitgestellt werden. Der Montagewinkel β liegt dabei im Bereich von 0° bis 90°, bevorzugt im Bereich von 0° bis 20°. Nach dieser Einführung der Außenzapfen 27 ist ein erster Zwischenmontageschritt abgeschlossen und im nächsten Montageschritt kann gemäß dem Übergang von Fig. 12b nach Fig. 12c das Flachwischblatt 4 oder das Verbindungsteil 9 um die durch die Außenzapfen 27 gebildete Schwenkachse gegen das Wischerarmende 3b geschwenkt werden, bis die Deckwände 10, 13b von Verbindungsteil 9 und Wischerarmende 3b aneinander anliegen. Um die Vormontageposition nach Fig. 12c erreichen zu können, muss der zungenförmige Endabschnitt 32 des Wischerarmendes 3b aber in das Verbindungsteil 9 eintauchen können. Zu diesem Zweck weist das Verbindungsteil 9 an seinem dem Wischerarm 2b abgewandten Längsende eine rechteckige Öffnung 33 auf, in die der zungenförmige Endabschnitt 32 des Wischerarmendes 3b eintaucht. Gemäß Fig. 12c ist somit eine Vormontageposition erreicht, in der der Scheibenwischer 1 aber noch nicht einsatzbereit wäre. Durch die Abstützung der Mantelflächen der Außenzapfen 27 gegen die Begrenzungskanten der Hinterschneidungen 29 und durch die Abstützung von Frontflächen des Wischerarmendes 3b gegen Seitenflächen des Verbindungsteils 19 ist zwar in Längs- und Vertikalrichtung eine Arretierung gewährt, und durch die Anlage der Innenseiten der Seitenwände 14b des Wischerarmendes 3b gegen die Außenseiten der Seitenwände 17 des Verbindungsteils 9 ist eine solche Arretierung auch in Querrichtung gegeben. Allerdings kann sich der Eingriff zwischen Außenzapfen 27 und Hinterschneidungen 29 durch Auseinanderschwenken von Wischerarm 2b und Flachwischblatt 4 in umgekehrter Reihenfolge der Montagesequenz aus den Figuren 12a bis 12c im Betriebszustand unbeabsichtigt lösen. Daher muss das Wischerarmende 3b gegen das Verbindungsteil 9 niedergehalten werden, um sich gegen ein solches Herausklappen aus dem Eingriff der Außenzapfen 27 mit den Seitenwandhinterschneidungen 29 des Wischerarmendes 3b abzusichern.

Fig. 13 stellt die Vormontageposition zwischen Wischerarm 2b und Flachwischblatt 4 in Halbschnittdarstellung durch das Wischerarmende 3b und die Verbindungsmittel 7 des Flachwischblatts 4 dar. Hier wird deutlich, dass die Federzunge 11 an der Deckwand 10 des Verbindungsteils 9 durch die Anlage der Rastnase 34 an der Innenseite der Deckwand 13b des Wischerarmendes 3b nach innen gebogen wird, ohne dass sie dabei noch eine Verrastungsfunktion ausübt.

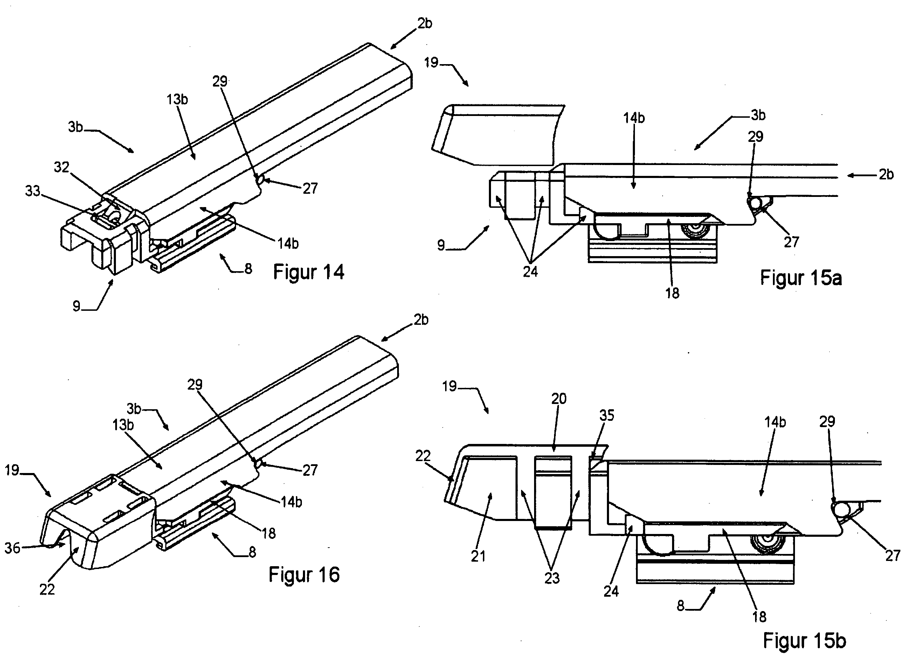

Fig. 14 zeigt nochmals in perspektivischer Darstellung die Verbindung zwischen Wischerarm 2b und Verbindungsteil 9 des Flachwischblatts 4 in einer Vormontageposition. Der Wischerarm 2b weist an seinem Ende 3b eine geringere Innenbreite als der vorbeschriebene Wischerarm 2a aus Fig. 6 nach dem Oberbegriff des Patentanspruchs 1 auf. Daher sind die seitlichen Außenleisten 18 des Verbindungsteils 9 jetzt nicht mehr, wie zu den Figuren 7a bis 7d beschrieben, als Gleitleisten im Inneren des Wischerarmendes 3a gelegen, sondern verlaufen jetzt außen bündig zu den Seitenwänden 14b des Wischerarmendes 3b. Dabei liegen die Seitenwände 14b des Wischerarmendes 3b mit ihren Unterseiten fast bündig auf den Außenleisten 18 des Verbindungsteils 9, wodurch ein vorteilhafter optischer Eindruck erzielt wird.

Um das Abheben des Wischerarms 2b vom Verbindungsteil 9 des Flachwischblatts 4 und damit ein Lösen des Eingriffs von Außenzapfen 27 des Verbindungsteils 9 und Hinterschneidungen 29 der Wischerarmseitenwände 14b unmöglich zu machen, wird das zu den Figuren 9a bis 9c bereits vorbeschriebene Haubenteil 19 auf das dem Wischerarmende 3b abgewandte Längsende des Verbindungsteils 9 gemäß den Figuren 15a und 15b aufgerastet. Dabei liegt die Deckwand 20 des Haubenteils 19 allerdings nicht mehr nur, wie bei dem Wischerarm 2a aus den Figuren 9a bis 9c beschrieben, an der Deckwand 10 des Verbindungsteils 9 an, sondern stützt mit der Unterseite seiner Deckwand 20 auch den zungenförmigen Endabschnitt 32 des Wischerarmendes 3b nach oben ab. Dafür besitzt das Haubenteil 19 an der Unterseite seiner Deckwand 20 eine Erhebung 35, die im Querschnitt annähernd trapezförmig ist, und in der Teilschnittdarstellung aus Fig. 15b zum Teil von einer Rastzunge 23 verdeckt erkennbar ist. Die Erhebung 35 auf der Haubenteil 19 - Innenseite weist eine zum zungenförmigen Endabschnitt 32 des Wischerarms 2b formkomplementäre Gestalt auf, so dass bei aufgerastetem Haubenteil 19 Erhebung 35 und zungenförmiger Endabschnitt 32 flächig aneinander anliegen. Die Verbindung von Haubenteil 19 und Verbindungsteil 9 geschieht wie vorbeschrieben durch Verrastung von Haubenteil-Rastzungen 23 in Verbindungsteil-Rastnuten 24. Da das Haubenteil 19 somit an dem Verbindungsteil 9 fixiert ist, ist der Wischerarm 2b in Form seines zungenförmigen Endabschnittes 32 auch gegen das Verbindungsteil 9 und hiermit das Flachwischblatt 4 vom Haubenteil 19 sicher niedergehalten, und es besteht nun eine betriebssichere Verbindung von Flachwischblatt 4 und Wischerarm 2b. Zur Demontage des Flachwischblatts 4 muss zunächst das Haubenteil 19 entfernt werden, was manuell einfach durch Aufweitung seiner Seitenwände 21 und darauf folgendes nach oben Herausschieben des Haubenteils 19 bewerkstelligt wird. Dann kann in umgekehrter Montagefolge der Figuren 12a bis 12c das Flachwischblatt 4 vom Wischerarmende 3b durch Herausschwenken gelöst werden.

Gemäß den Figuren 15a und 15b geschieht die Verrastung von Haubenteil 19 auf Verbindungsteil 9 in einer relativen Längsposition zueinander, in der beide Rastzungen 23 des Haubenteils 19 in die beiden dem Wischerarmende 3b abgewandten Rastnuten 24 des Verbindungsteils 9 einrasten. Aus Fig. 15b wird deutlich, dass zwischen der Stirnwand 22 des Haubenteils 19 und der vom Haubenteil 19 umhüllten Stirnfläche des Verbindungsteils 9 ein freier Abstand vorliegt, während die freie Stirnfläche der Deckwand 20 des Haubenteils 19 an der Stirnfläche der Deckwand 13b des Wischerarmendes 3b bündig anliegt.

Die hier beschriebenen zwei "Top-lock"-Anschlüsse, d.h. Anschlüsse zwischen einem Wischblatt und einem oberhalb davon angeordneten Wischerarm, finden zwischen einem gemeinsamen Flachwischblatt 4 und zwei verschiedenen Wischerarmkonstruktionen 2a, 2b statt. Es wird dafür ein gemeinsames, universelles Verbindungsteil 9 eingesetzt. Durch den Einsatz des universellen Verbindungsteils 9 kann der Einsatzbereich eines Flachwischblatts 4 gemäß Fig. 1 ebenfalls erweitert werden, indem dessen Montage nun mit zwei verschiedenen Wischerarmen 2a, 2b möglich ist.

## Patentansprüche

1. Scheibenwischer (1), insbesondere für eine Scheibe eines Kraftfahrzeuges, mit einem antreibbaren Wischerarm (2a) und mit einem am freien Ende (3a) des Wischerarms anordenbaren Flachwischblatt (4), das ein Wischgummi (5), ein das Wischgummi (5) unterstützendes Tragmittel (6), welches vorzugsweise in Form einer bandartig langgestreckten Federschiene ausgebildet ist, und Verbindungsmittel (7) zur Anbindung des Flachwischblatts (4) an das freie Ende (3a) des Wischerarms (2a) umfasst, wobei diese Verbindungsmittel (7) aus einem am Tragmittel (6) fest angeordneten Anschlussteil (8) und aus einem am Anschlussteil (8) drehbar angeordneten Verbindungsteil (9) bestehen, wobei dieses Verbindungsteil (9) ein im Wesentlichen U-förmiges Querschnittsprofil mit zwei Seitenwänden (27) besitzt und an seiner dem Wischerarm (2a) zugewandten Deckwand (10) eine Federzunge (11) trägt, die im montierten Zustand in eine Öffnung (12) in einer Deckwand (13a) des Wischerarmendes (3a) eingreift, wobei das Wischerarmende (3a) ein im Wesentlichen U-förmiges Querschnittsprofil besitzt und wobei an den unteren Enden seiner beiden Seitenwände (14a) jeweils eine nach innen gebogene Führungsleiste (15) angeformt ist, **dadurch gekennzeichnet, dass** die beiden Seitenwände (17) des Verbindungsteils (9) jeweils an den dem Wischerarm (2a) zugewandten Längsenden eine Einführschräge (26) aufweisen, dass zur Montage des Flachwischblatts (4) mit dem Wischerarm (2a) das Verbindungsteil (9) des Flachwischblatts (4) in die offene Stirnseite (16) des Wischerarmendes (3a) unter einem zwischen Verbindungsteil-(9) und Wischerarm- (2a) Längsachse gebildeten Montagewinkel α in Längsrichtung einführbar und einschiebbar ist, indem das Verbindungsteil (9) mit zwei an den beiden Seitenwänden (17) nach außen weisenden Gleitleisten (18) auf den beiden Führungsleisten (15) im Inneren des Wischerarmendes (3a) gleitbar gelagert und soweit einschiebbar ist, dass die Federzunge (11) in die Öffnung (12) einrastet und dass an den beiden Seitenwänden (17) des Verbindungsteils (9) jeweils ein Außenzapfen (27) ausgebildet ist, deren Stirnflächen (28) im eingeschobenen Zustand an der Innenseite der Seitenwände (14a) des Wischerarmendes (3a) anliegen, wobei diese Außenzapfen (27) als Querzentriermittel das Einführen der Verbindungsmittel (7) des Flachwischblatts (4) in das Wischerarmende (3a) erleichtern.

2. Scheibenwischer nach Anspruch 1, **dadurch gekennzeichnet, dass** ein Haubenteil (19), das ein im Wesentlichen U-förmiges Querschnittsprofil besitzt und aus einer Deckwand (20), zwei Seitenwänden (21) und einer Stirnwand (22) besteht, über eine lösbare Rastverbindung von oben auf das Verbindungsteil (9) aufrastbar ist.

3. Scheibenwischer nach Anspruch 2, **dadurch gekennzeichnet, dass** die Rastverbindung durch an der Innenseite des Haubenteils (19) ausgebildete Rastzungen (23) und an der Außenseite des Verbindungsteils (9) ausgebildete Rastnuten (24) realisiert ist.

4. Scheibenwischer nach einem der vorhergehenden Ansprüche, **dadurch gekennzeichnet, dass** an den beiden Gleitleisten (18) des Verbindungsteils (9) jeweils ein nach unten weisender Sockel (25) angeformt ist, der im montierten Zustand jeweils an der Führungsleiste (15) des Wischerarmendes (3a) anliegt.

5. Scheibenwischer nach einem der vorhergehenden Ansprüche, **dadurch gekennzeichnet, dass** der zur Einführung der Verbindungsteils (9) des Flachwischblatts (4) in das Wischerarmende (3a) gebildete Montagewinkel α zwischen den Längsachsen von Verbindungsteil (9) und Wischerarm (2a) zwischen 0° und 90°, vorzugsweise zwischen 0° und 45°, beträgt.

6. Scheibenwischer nach Anspruch 3 bis 5, **dadurch gekennzeichnet, dass** das Verbindungsteil (9) an den Außenseiten der Seitenwände (17) jeweils drei gleich beabstandete vertikale Rastnuten (24) und das Haubenteil (19) an den Innenseiten der Seitenwände (21) jeweils zwei gleich beabstandete vertikale Rastzungen (23) aufweist, so dass die Verbindung zwischen Haubenteil (19) und Verbindungsteil (9) in zwei relativen Längspositionen zueinander erfolgen kann.

7. Scheibenwischer nach einem der vorhergehenden Ansprüche, **dadurch gekennzeichnet, dass** an den Innenseiten der Seitenwände (17) des Verbindungsteils (9) zwei in Querrichtung miteinander fluchtende Innenzapfen (30) ausgebildet sind, die im montiertem Zustand jeweils in eine Lagerbohrung (31) des Anschlussteils (8) eingeführt sind, so dass eine Schwenkverbindung zwischen Anschlussteil (8) und Verbindungsteil (9) hergestellt ist.

8. Scheibenwischer nach einem der vorhergehenden Ansprüche, **dadurch gekennzeichnet, dass** das Haubenteil (19) an seiner Stirnwand (22) einen Schlitz (36) aufweist, um eine begrenzte Verdrehung des mit dem Haubenteil (19) versehenen Verbindungsteils (9) relativ zum Flachwischblatt (4) zu gestatten.

## Claims

1. Windscreen wiper (1), in particular for a windscreen of a motor vehicle, comprising a driveable wiper arm (2a) and comprising a flat wiper blade (4) which can be arranged on the free end (3a) of the wiper arm (2a) and which comprises a wiper rubber (5), a support means (6) that supports the wiper rubber (5) and is preferably designed in the form of a resilient bar that is elongate in the manner of a strip, and linking means (7) for linking the flat wiper blade (4) to the free end (3a) of the wiper arm (2a, said linking means (7) consisting of a connection part (8) fixedly arranged on the support means (6) and of a linking part (9) rotatably arranged on the connection part (8), said linking part (9) having a substantially U-shaped cross-sectional profile having two side walls (27), and supporting, on the top wall (10) of said linking part facing the wiper arm (2a), a resilient tongue (11) that engages in an opening (12) in a top wall (13a) of the wiper arm end (3a) when in the assembled state, the wiper arm end (3a) having a substantially U-shaped cross-sectional profile, and an inwardly bent guide rail (15) being integrally formed on each of the lower ends of the two side walls (14a) of said wiper arm end, **characterised in that** the two side walls (17) of the linking part (9) each comprise an insertion incline (26) on the longitudinal ends facing the wiper arm (2a), and **in that**, in order to assemble the flat wiper blade (4) together with the wiper arm (2a), the linking part (9) of the flat wiper blade (4) can be inserted or pushed in the longitudinal direction into the open end face (16) of the wiper arm end (3a) at an assembly angle α formed between the longitudinal axes of the linking part (9) and the wiper arm (2a), by the linking part (9) being slidably mounted inside the wiper arm end (3a) on the two guide rails (15) by means of two slide rails (18) that face outwardly on the two side walls (17) and by it being possible to push said linking part so far **in that** the resilient tongue (11) latches into the opening (12) and **in that** an outer pin (27) is formed on each of the two side walls (17) of the linking part (9), the end faces (28) of which pins lie against the inner face of the side walls (14a) of the wiper arm end (3a) when in the pushed-in state, said outer pins (27), as transverse centring means, making it easier to insert the linking means (7) of the flat wiper blade (4) into the wiper arm end (3a).

2. Windscreen wiper according to claim 1, **characterised in that** a cover part (19), which has a substantially U-shaped cross-sectional profile and consists of a top wall (20), two side walls (21) and an end wall (22), can be latched onto the linking part (9) from above by means of a releasable latching connection.

3. Windscreen wiper according to claim 2, **characterised in that** the latching connection is established by means of latching tongues (23) formed on the inner face of the cover part (19) and latching grooves (24) formed on the outer face of the linking part (9).

4. Windscreen wiper according to any of the preceding claims, **characterised in that** a downwardly facing base (25) is integrally formed on each of the two slide rails (18) of the linking part (9), which base lies in each case against the guide rail (15) of the wiper arm end of the first kind (3a) when in the assembled state.

5. Windscreen wiper according to any of the preceding claims, **characterised in that** the assembly angle α between the longitudinal axes of the linking part (9) and the wiper arm (2a), formed for inserting the linking part (9) of the flat wiper blade (4) into the wiper arm end of the first kind (3a), is between 0° and 90°, preferably between 0° and 45°.

6. Windscreen wiper according to claim 3 to 5, **characterised in that** the linking part (9) comprises, on the outer faces of each of the side walls (17), three equally spaced vertical latching grooves (24), and the cover part (19) comprises, on the inner faces of each of the side walls (21), two equally spaced vertical latching tongues (23), such that the connection between the cover part (19) and the linking part (9) can be established in two relative longitudinal positions with respect to one another.

7. Windscreen wiper according to any of the preceding claims, **characterised in that** two transversely mutually aligned inner pins (30) are formed on the inner faces of the side walls (17) of the linking part (9), which inner pins are each inserted into a bearing hole (31) in the connection part (8) when in the assembled state such that a pivotal connection is established between the connection part (8) and the linking part (9).

8. Windscreen wiper according to any of the preceding claims, **characterised in** the cover part (19) comprises, on the end wall (22) thereof, a slot (36) in order to allow limited rotation of the linking part (9) provided with the cover part (19) relative to the flat wiper blade (4).

## Revendications

1. Essuie-glace (1), en particulier pour une vitre d'un véhicule automobile, avec un bras d'essuie-glace motorisable (2a), et avec un balai d'essuie-glace plat (4) qui peut être disposé à l'extrémité libre (3a) du bras d'essuie-glace (2a) et qui comprend une lame caoutchouc (5), un moyen porteur (6), soutenant la lame caoutchouc (5) et réalisé de préférence sous la forme d'une barrette élastique oblongue du genre bande, et des moyens de liaison (7) pour rattacher le balai d'essuie-glace plat (4) à l'extrémité libre (3a) du bras d'essuie-glace (2a), sachant que ces moyens de liaison (7) sont constitués d'une pièce de raccordement (8) disposée fixement sur le moyen porteur (6) et d'une pièce de liaison (9) disposée à rotation sur la pièce de raccordement (8), sachant que cette pièce de liaison (9) possède un profil de section essentiellement en forme de U avec deux parois latérales (27) et porte, sur sa paroi de recouvrement (10) tournée vers le bras d'essuie-glace (2a), une languette flexible (11) qui, dans l'état monté, s'engage dans une ouverture (12) dans une paroi de recouvrement (13a) de l'extrémité (3a) du bras d'essuie-glace, sachant que l'extrémité (3a) du bras d'essuie-glace possède un profil de section essentiellement en forme de U et sachant qu'un rail de guidage respectif (15), courbé vers l'intérieur, est formé aux extrémités inférieures de ses deux parois latérales (14a), **caractérisé en ce que** les deux parois latérales (17) de la pièce de liaison (9) présentent un biais d'introduction respectif (26) aux extrémités longitudinales tournées vers le bras d'essuie-glace (2a), et **en ce que**, pour le montage du balai d'essuie-glace plat (4) avec le bras d'essuie-glace (2a), la pièce de liaison (9) du balai d'essuie-glace plat (4) peut être introduite et rentrée par coulissement en direction longitudinale dans le côté frontal ouvert (16) de l'extrémité (3a) du bras d'essuie-glace sous un angle de montage α formé entre l'axe longitudinal de la pièce de liaison (9) et l'axe longitudinal du bras d'essuie-glace (2a), par le fait que la pièce de liaison (9) est, par deux glissières (18) dirigées vers l'extérieur sur les deux parois latérales (17), montée à coulissement sur les deux rails de guidage (15) à l'intérieur de l'extrémité (3a) du bras d'essuie-glace, et peut être rentrée par coulissement jusqu'à ce que la languette flexible (11) s'enclenche dans l'ouverture (12) et **en ce qu'**un tenon extérieur (27) respectif est formé sur les deux parois latérales (17) de la pièce de liaison (9), tenon dont les faces frontales (28), dans l'état rentré par coulissement, s'appliquent contre le côté intérieur des parois latérales (14a) de l'extrémité (3a) du bras d'essuie-glace, sachant que ces tenons extérieurs (27) facilitent, en tant que moyens de centrage transversal, l'introduction des moyens de liaison (7) du balai d'essuie-glace plat (4) dans l'extrémité (3a) du bras d'essuie-glace.

2. Essuie-glace selon la revendication 1, **caractérisé en ce qu'**une pièce formant capot (19), qui possède un profil de section essentiellement en forme de U et qui est constituée d'une paroi de recouvrement (20), de deux parois latérales (21) et d'une paroi frontale (22), peut être enclenchée par le dessus sur la pièce de liaison (9) au moyen d'une liaison par enclenchement amovible.

3. Essuie-glace selon la revendication 2, **caractérisé en ce que** la liaison par enclenchement est réalisée par des languettes d'enclenchement (23) formées sur le côté intérieur de la pièce formant capot (19) et des rainures d'enclenchement (24) formées sur le côté extérieur de la pièce de liaison (9).

4. Essuie-glace selon l'une des revendications précédentes, **caractérisé en ce qu'**une embase (25) respective dirigée vers le bas est formée sur les deux glissières (18) de la pièce de liaison (9), embase qui, dans l'état monté, s'applique respectivement contre le rail de guidage (15) de l'extrémité (3a) du bras d'essuie-glace.

5. Essuie-glace selon l'une des revendications précédentes, **caractérisé en ce que** l'angle de montage a, formé entre les axes longitudinaux de la pièce de liaison (9) et du bras d'essuie-glace (2a) pour l'introduction de la pièce de liaison (9) du balai d'essuie-glace plat (4) dans l'extrémité (3a) du bras d'essuie-glace, est compris entre 0° et 90°, de préférence entre 0° et 45°.

6. Essuie-glace selon la revendication 3 à 5, **caractérisé en ce que** la pièce de liaison (9) présente trois rainures d'enclenchement verticales équidistantes respectives (24) sur les côtés extérieurs des parois latérales (17) et la pièce formant capot (19) présente deux languettes d'enclenchement verticales équidistantes respectives (23) sur les côtés intérieurs des parois latérales (21), de sorte que la liaison entre la pièce formant capot (19) et la pièce de liaison (9) peut avoir lieu dans deux positions longitudinales relatives d'une pièce par rapport à l'autre.

7. Essuie-glace selon l'une des revendications précédentes, **caractérisé en ce que** deux tenons intérieurs (30), mutuellement alignés en direction transversale, sont formés sur les côtés intérieurs des parois latérales (17) de la pièce de liaison (9), tenons qui, dans l'état monté, sont respectivement introduits dans un perçage de palier (31) de la pièce de raccordement (8), de sorte qu'une liaison pivotante est réalisée entre la pièce de raccordement (8) et la pièce de liaison (9).

8. Essuie-glace selon l'une des revendications précédentes, **caractérisé en ce que** la pièce formant capot (19) présente sur sa paroi frontale (22) une fente (36), afin de permettre une rotation limitée de la pièce de liaison (9) pourvue de la pièce formant capot (19) par rapport au balai d'essuie-glace plat (4).
